# FASCICULE DE BREVET EUROPEEN

(11) **EP 2 165 588 B1**
(45) Date de publication et mention de la délivrance du brevet: **12.06.2013**
(21) Numéro de dépôt: 09305875.8
(22) Date de dépôt: 21.09.2009
(51) Int. Cl.: A01D 34/44, A01D 67/00, A01B 73/04, A01D 82/00

(54) **Dispositif pour le déchiquetage et le broyage de végétaux au sol, attelable à un véhicule tracteur**
Vorrichtung zum Schreddern und Zerkleinern von Pflanzen am Boden, die an ein Zugfahrzeug angehängt werden kann
Device for tearing and grinding plants on the ground, hitchable to a tow vehicle

(30) Priorité: 22.09.2008 FR 0805189
(43) Date de publication de la demande: 24.03.2010
(73) Titulaire: Desvoys et Fils, 53190 Landivy (FR)
(72) Inventeur: Desvoys, Jean-Baptiste, 35000 Rennes (FR)
(74) Mandataire: Michelet, Alain

(56) Documents cités:
- EP-A- 1 902 605
- EP-A2- 0 900 515
- DE-C1- 19 931 684
- FR-A- 2 912 870
- US-A1- 2003 140 610

## Description

La présente invention concerne un dispositif agricole pour le déchiquetage et le broyage de végétaux au sol, destiné à être attelé à un véhicule tracteur.

Dans les exploitations agricoles, il est fréquent d'employer un dispositif attelé à l'arrière d'un véhicule tracteur pour broyer et déchiqueter certains types de végétaux qui sont présents au sol ; c'est le cas par exemple des refus de pâturage, des terrains enherbés, ou des résidus de jachères/récoltes.

Ces dispositifs broyeurs/déchiqueteurs sont pour certains du genre semi porté, c'est-à-dire qu'ils comportent un châssis équipé - à l'avant, de moyens d'accrochage en porte-à-faux sur l'attelage trois points d'un véhicule tracteur, et - à l'arrière, d'un essieu à roues reposant et roulant sur le sol.
Le châssis correspondant porte dans certains cas trois éléments de broyage/déchiquetage, c'est-à-dire trois structures de type caissons comportant chacune un carter équipé de rotors munis de couteaux coupants, qui sont entraînés en rotation (horizontalement ou verticalement, selon le cas) par des moyens de transmission (boîtier réducteur, cardan, etc.) connectés à la prise de force du véhicule tracteur.
L'un des caissons de déchiquetage/broyage, à savoir le caisson dit « central », est porté en position centrale sur l'axe longitudinal du châssis, pour assurer le déchiquetage/broyage des végétaux sur la largeur de ce châssis. Les deux autres caissons, dits « latéraux », prolongent le châssis sur les côtés et sont positionnés transversalement par rapport au sens de cheminement normal du matériel.
Cette particularité confère à ces machines la capacité de broyer/déchiqueter les végétaux sur de larges bandes de part et d'autre du châssis ; en pratique, les surfaces à traiter étant souvent étendues, on améliore ainsi les rendements, et on autorise une diminution du nombre d'allers et de retours à effectuer sur la largeur du terrain à traiter.

En pratique, les couteaux en rotation coupent les végétaux au sol et réalisent leur déchiquetage ; la matière broyée/déchiquetée est ensuite rejetée par l'arrière des caissons, directement sur le sol, de sorte à se désagréger naturellement dans le temps.

Dans certaines circonstances, le dispositif broyeur/déchiqueteur doit pouvoir être manoeuvré au moyen du véhicule tracteur associé, de manière à élever ces caissons par rapport au sol.
C'est le cas notamment lorsque le véhicule tracteur circule sur routes pour aller d'un terrain à un autre, lorsque l'on souhaite passer au-dessus d'un obstacle (sans en faire le tour) ou encore tout simplement lorsque l'on tourne en bout de champ pour faire demi-tour.

Or, les dimensions importantes des caissons de broyage/déchiquetage aboutissent à une masse totale élevée pour le dispositif semi-porté. Ce dispositif nécessite alors une puissance conséquente de relevage et dans certains cas le lestage du véhicule tracteur pour équilibrer l'ensemble routier.
De plus, la capacité de relevage du véhicule tracteur étant généralement fonction de sa puissance de motorisation, ce paramètre oblige l'utilisation de véhicules tracteurs puissants, et donc coûteux, pour la manoeuvre de ces dispositifs.

De même, afin d'optimiser les opérations de broyage/déchiquetage, les caissons de broyage/déchiquetage doivent être réglables précisément en hauteur par rapport au sol.

Le document EP-A-0 900 515 décrit une structure de broyeur/déchiqueteur de végétaux, attelable à un véhicule tracteur.

Le dispositif de déchiquetage/broyage selon ce document EP-A-0 900 515 comprend un châssis équipé - à l'arrière, d'un essieu, - à l'avant, d'un timon pour l'accrochage sur l'attelage trois points d'un véhicule tracteur, et - de trois caissons de déchiquetage/broyage, à axe de rotation horizontal, à savoir un caisson de broyage/déchiquetage « central » et deux caissons de déchiquetage/broyage « latéraux ».

Dans ce dispositif de déchiquetage/broyage, l'essieu arrière est ajustable en hauteur au moyen d'un vérin hydraulique.

Les caissons latéraux sont portés par le châssis indépendamment du caisson central, de part et d'autre dudit châssis et en avant de l'essieu arrière, par le biais de bras support articulés.

Le caisson central est quant à lui porté par le châssis, dans le prolongement dudit châssis et derrière l'essieu arrière.

Les différents caissons de broyage/déchiquetage sont chacun solidarisés par l'intermédiaire d'un système d'attelage trois points, ce qui permet leur montée de la même manière qu'ils seraient couplés directement au tracteur, en particulier pour les manoeuvrer dans une position transport.

Cependant, le dispositif de déchiquetage/broyage décrit dans ce document EP-0 900 515 n'offre pas une structure autorisant un cheminement optimal sur la route, en particulier du fait des faibles possibilités pour ajuster la hauteur de son centre de gravité par rapport au sol.

La demanderesse a développé une nouvelle structure de broyeur/déchiqueteur de végétaux, dont le centre de gravité de l'ensemble du dispositif est apte à être abaissé vers le sol, de manière à optimiser sa stabilité lors de son transport sur route.

Cette nouvelle structure de broyage/déchiquetage de végétaux, attelable à un véhicule tracteur, comporte encore des caissons qui ont l'avantage de pouvoir être réglés en hauteur par rapport au sol, sans nécessiter l'utilisation d'un véhicule tracteur très puissant, et/ou sérieusement lesté.

La structure de ce broyeur/déchiqueteur a en plus l'avantage de permettre, de manière simple et rapide, une manoeuvre des caissons selon des configurations adaptées à différentes situations (circulation sur route, franchissement d'obstacles, rotation en bout de champ, réglage de la hauteur de travail, etc.).

En l'espèce, le dispositif de déchiquetage/broyage selon l'invention est du genre comprenant un châssis équipé - à l'arrière, d'un essieu, - à l'avant, d'un timon pour l'accrochage sur l'attelage trois points du véhicule tracteur, et - de trois caissons de déchiquetage/broyage, à axe de rotation vertical ou horizontal : un caisson de déchiquetage/broyage « central ", et deux caissons de déchiquetage/broyage « latéraux ».

Dans ce dispositif :
(i) l'essieu arrière coopère avec le châssis par l'intermédiaire de moyens de manoeuvre qui permettent son déplacement vertical par rapport audit châssis, en déploiement et en repliement, de manière à autoriser un déplacement vertical dudit châssis, en montée ou en descente par rapport au sol,
(ii) les caissons latéraux sont portés par le châssis indépendamment du caisson central, de part et d'autre dudit châssis et en avant de l'essieu arrière, par l'intermédiaire de moyens de manoeuvre qui permettent leur articulation par rapport audit châssis,
(iii) le caisson central est porté par le châssis, dans le prolongement dudit châssis et derrière ledit essieu arrière, par l'intermédiaire de moyens de manoeuvre qui permettent son déplacement vertical, en montée ou en descente, par rapport audit châssis.

Conformément à l'invention, ce dispositif est caractérisé par le fait que le timon avant coopère avec le châssis également par l'intermédiaire de moyens de manoeuvre qui permettent son déplacement vertical par rapport audit châssis, en déploiement et en repliement, de manière à autoriser un déplacement vertical dudit châssis parallèlement à lui-même, ou au moins sensiblement parallèlement à lui-même, en montée ou en descente par rapport au sol.

Le dispositif agricole est ainsi manoeuvrable selon deux principales configurations, avec :
- la configuration « inactive », en particulier pour le cheminement sur route, dans laquelle le châssis est déplacé dans une position basse « maximale », à proximité du sol, et dans laquelle les différents caissons sont relevés, à distance du sol, et
- la configuration « active », en particulier pour le déchiquetage et le broyage des végétaux, dans laquelle ledit châssis est déplacé dans une position basse « intermédiaire », plus haute que ladite position basse maximale, et dans laquelle les différents caissons sont amenés en position basse active de déchiquetage/broyage, à proximité du sol.

Cette structure particulière du dispositif de broyage/déchiquetage offre une possibilité de configuration optimale à la fois pour le déplacement sur route et pour le travail en champs, cela sans nécessiter l'utilisation d'un véhicule tracteur puissant et/ou fortement lesté.

La position basse maximale du châssis, en configuration « inactive », permet d'abaisser le centre de gravité vers le sol de l'ensemble du dispositif, et optimise sa stabilité lors de son transport sur route. La position basse intermédiaire du châssis, en configuration « active », autorise quant à elle un ajustement précis de la hauteur de ce châssis et par conséquent des caissons de broyage/déchiquetage associés par rapport au sol.

Dans ce cas, le timon est associé à l'extrémité avant du châssis avantageusement par l'intermédiaire de moyens de manoeuvre qui permettent son déplacement vertical parallèlement à lui-même ou au moins sensiblement parallèlement à lui-même, cela en déploiement ou repliement par rapport audit châssis, lesquels moyens de manoeuvre se composent avantageusement de bielles agencées pour former un parallélogramme déformable entre ledit châssis et ledit timon, des moyens d'action du genre vérin(s) étant prévus entre ledit châssis et lesdites bielles pour assurer la manoeuvre verticale dudit timon.

Toujours dans ce cas, les moyens d'action arrière et avant, respectivement de l'essieu et du timon, consistent avantageusement en des vérins hydrauliques, lesquels vérins avant et arrière sont connectés de sorte à autoriser un échange d'huile entre, d'une part, la chambre côté « fût » des vérins avant ou arrière, et d'autre part, la chambre côté « tige » des autres vérins, lesquelles chambres ont un volume identique, cela pour assurer le déplacement vertical du châssis parallèlement à lui-même, en montée ou en descente par rapport au sol.

Selon une autre caractéristique de l'invention, l'essieu arrière est avantageusement porté par une structure support montée pivotante sur le châssis, formant ainsi un mécanisme du genre « ciseau », des moyens d'action du genre vérin(s) étant prévus entre ledit châssis et ladite structure support pour manoeuvrer cette dernière en rotation et assurer ainsi le déplacement vertical, en déploiement et en repliement, de l'essieu par rapport audit châssis ; dans ce cas, l'essieu est avantageusement porté par l'extrémité arrière de la structure support, elle-même associée au châssis, au niveau de son extrémité avant, par une articulation située au milieu ou au moins approximativement au milieu de la longueur dudit châssis.

D'autres caractéristiques de l'invention, pouvant être pris en combinaison ou indépendamment les unes des autres sont précisées ci-après :
- les moyens de manoeuvre de l'essieu arrière sont associés à des moyens de butée destinés à définir une position de fin de course réglable pour la montée dudit essieu vers le châssis, en particulier pour régler la position basse intermédiaire du châssis, lesquels moyens de butée sont pilotés par les moyens de manoeuvre du caisson central entre : - une configuration « active » de butée, lorsque ledit caisson central atteint sa position basse de broyage/déchiquetage, et - une configuration « inactive », lorsque ledit caisson central atteint sa position haute inactive ;
- les moyens de manoeuvre de l'essieu arrière sont associés à des moyens pour le verrouillage des caissons latéraux en position relevée verticale, lesquels moyens de verrouillage sont manoeuvrables entre : - une configuration « active » de verrouillage, lorsque l'essieu atteint sa position de fin de course à proximité du châssis, et - une configuration « inactive », lorsque ledit essieu est manoeuvré à distance dudit châssis ;
- le châssis consiste en une structure métallique mécano-soudée, comportant une partie centrale longitudinale à distance du sol, laquelle partie centrale longitudinale est munie - au niveau de son extrémité avant, du timon pour l'attelage sur le véhicule tracteur, - à son extrémité arrière, de l'essieu qui s'étend vers le bas jusqu'au sol, - sur chacun de ses côtés et en avant de l'essieu, de l'un des caissons de broyage/déchiquetage latéraux, et - en arrière de l'essieu, du caisson de broyage/déchiquetage central.

L'invention est encore illustrée, sans être aucunement limitée, par la description suivante d'une forme de réalisation particulière, représentée sur les dessins annexés, dans lesquels :
- la figure 1 est une vue générale du dispositif de broyage/déchiquetage, selon une perspective orientée du côté de son timon avant (le caisson de broyage/déchiquetage central n'étant pas représenté pour simplifier la figure, et l'un des caissons latéraux étant relevé) ;
- la figure 2 est une vue du dispositif de broyage/déchiquetage de la figure 1, représenté ici selon une perspective orientée du côté de son essieu arrière (le caisson de déchiquetage/broyage central n'étant, là encore, pas représenté) ;
- la figure 3 montre encore le dispositif broyeur/déchiqueteur des figures 1 et 2, ici vu de côté et selon une configuration « active » qui est adaptée au travail sur parcelles à traiter ;
- la figure 4 est encore une vue de côté du dispositif broyeur/déchiqueteur des figures 1 à 3, maintenant agencé dans sa configuration « inactive » adaptée à son déplacement sur routes ;
- la figure 5 est une vue agrandie de la partie arrière du même dispositif broyeur/déchiqueteur, selon une perspective orientée en dessous du châssis de sorte à montrer la structure des moyens de manoeuvre de l'essieu arrière ;
- la figure 6 représente la partie avant du dispositif broyeur/déchiqueteur selon une perspective destinée à montrer la structure des moyens de manoeuvre du timon avant ;
- les figures 7 et 8 sont des vues de côté du dispositif de broyage/déchiquetage des figures 1 à 6 (les caissons ne sont pas représentés pour accéder visuellement aux moyens de manoeuvre du timon avant et de l'essieu arrière), dans lesquelles le châssis est montré respectivement en position basse maximale et en position haute maximale ;
- la figure 9 est une vue isolée de la partie arrière du dispositif illustrant la structure des moyens pour le support et la manoeuvre du caisson central arrière ;
- les figures 10 et 11 représentent seulement la partie arrière du dispositif de la figure 1, vu de côté, avec son caisson central de broyage/déchiquetage dans les positions basse et haute respectivement ;
- les figures 12 à 16 montrent la partie arrière du dispositif broyeur/déchiqueteur des figures 1 à 11, vu de côté, selon les principales étapes de la cinématique pour le passage depuis une position en butée du châssis pour le travail en champs (figure 12), jusqu'à une position basse maximale du châssis adaptée au transport sur route (figure 16) ;
- les figures 17 et 18 sont des vues de détail qui montrent les moyens prévus pour l'activation et l'inactivation des moyens de butée du châssis en position travail.

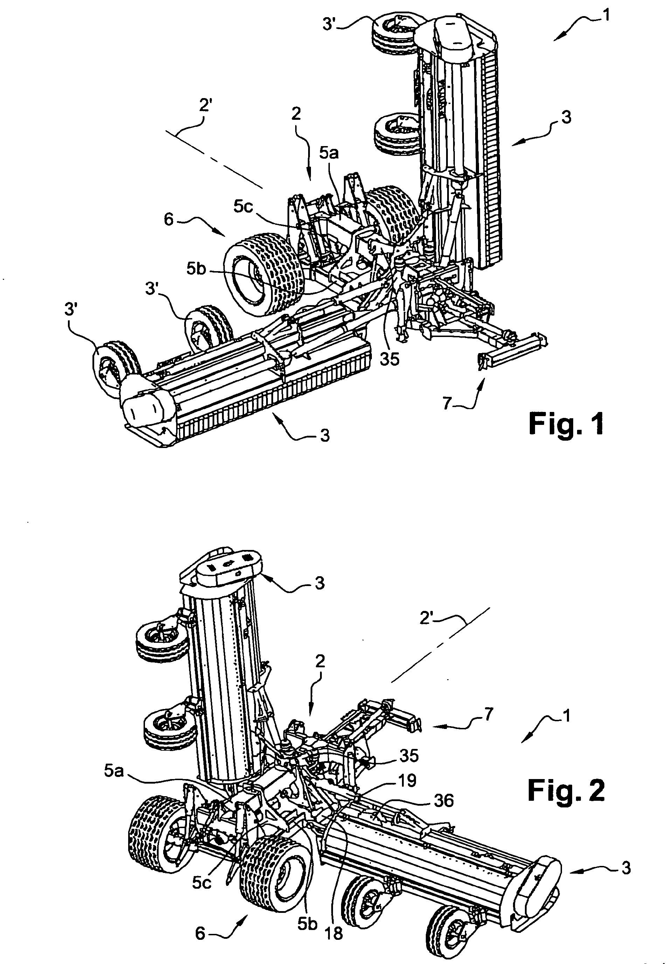

Le dispositif 1 déchiqueteur/broyeur de végétaux, tel que représenté en particulier sur les figures 1 à 4, est du genre semi-porté.
Il se compose d'un châssis 2 portant trois caissons de déchiquetage/broyage : à savoir deux caissons dits « latéraux » 3 et un dernier caisson dit « central » 4 (ce caisson central 4 n'étant pas représenté sur les figures 1 et 2). Ces caissons 3, 4 sont ici du type à rotor à axe horizontal de rotation.

Le châssis 2 se compose en l'occurrence d'une partie centrale longitudinale, formée d'un longeron principal/central 5a associé à deux longerons latéraux 5b par l'intermédiaire de platines supports 5c.
Ce châssis 2 s'étend dans un plan horizontal ou sensiblement horizontal au-dessus et à distance du sol (cette distance étant réglable comme développé par la suite). Il présente également un plan ou axe longitudinal de symétrie 2', correspondant au sens de cheminement du dispositif 1 tracté de manière rectiligne.

Le châssis 2 est équipée - à l'arrière, d'un essieu à roues 6 destiné à reposer et à rouler sur le sol, et - à l'avant, d'un timon 7 pour l'accrochage sur l'attelage trois points d'un véhicule tracteur (non représenté).

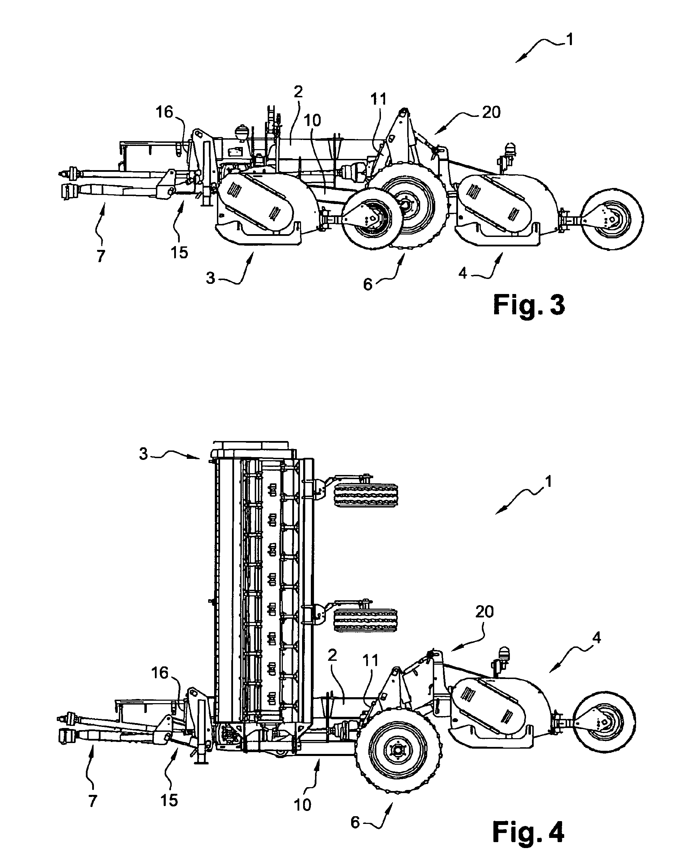

Le dispositif agricole 1 selon l'invention est manoeuvrable selon deux principales configurations : - l'une « active » (figure 3), adaptée en particulier pour le déchiquetage et le broyage des végétaux, et - l'autre « inactive » (figure 4), utile en particulier pour le cheminement sur routes.

Plus précisément, dans la configuration dite « active » (figure 3), le châssis 2 est déplacé dans une position basse « intermédiaire » ; et les différents caissons 3, 4 sont amenés en position basse de déchiquetage/broyage, à proximité du sol.
Dans ce cas, les caissons 3, 4 sont réglables en hauteur par rapport au sol, cela par une manoeuvre verticale adaptée du châssis porteur 2.

Dans la configuration dite « inactive » (figure 4), le châssis 2 est déplacé dans une position basse « maximale », à proximité du sol (c'est-à-dire une hauteur du châssis 2 qui est inférieure à la hauteur de ce même châssis en position basse « intermédiaire » précitée) ; et les différents caissons 3, 4 sont relevés à distance du sol.
Dans cette configuration « inactive », le dispositif 1 présente un centre de gravité abaissé, avec les gains de stabilité pour son déplacement sur route qui en découlent.

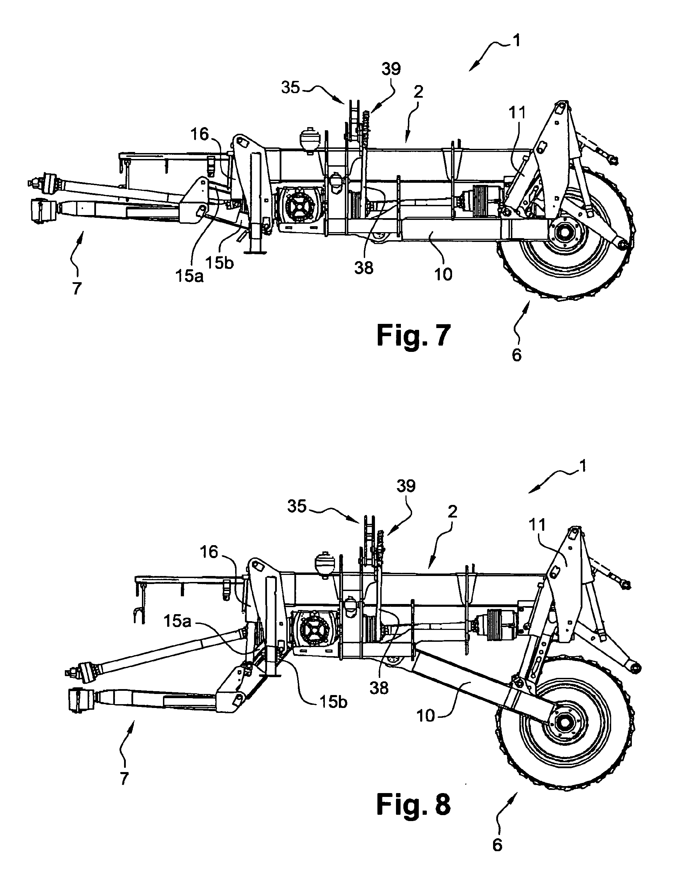

Pour permettre la mise en oeuvre de ces différentes configurations, tout d'abord, l'essieu arrière 6, et avantageusement le timon avant 7, coopèrent chacun avec le châssis 2 par l'intermédiaire de moyens mécaniques qui permettent leur manoeuvre verticale respective par rapport audit châssis 2, en repliement (figure 7) et en déploiement (figure 8).
Les mouvements coordonnés de l'essieu 6 et du timon 7 vont assurer ici le déplacement vertical du châssis 2 parallèlement à lui-même (ou au moins sensiblement parallèlement à lui-même), en descente et en montée par rapport au sol. Ce châssis 2 est ainsi manoeuvrable entre deux positions de fin de course : l'une basse maximale (figure 7) et l'autre haute maximale (figure 8).

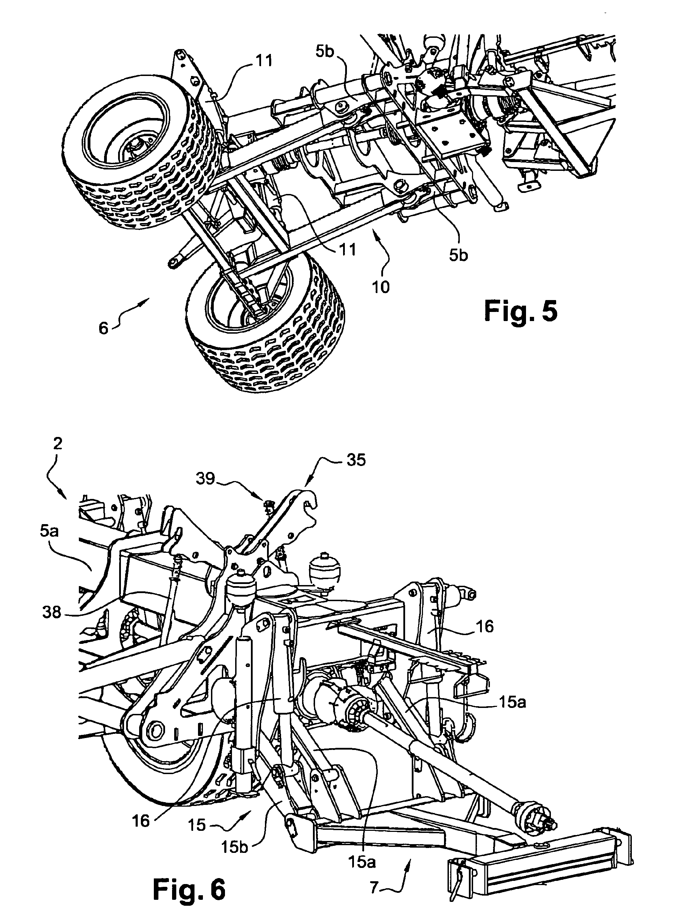

Une forme possible des moyens mécaniques pour la manoeuvre de l'essieu arrière 6 sont représentés en particulier sur la figure 5.
Ces moyens mécaniques se composent d'une structure support 10, ici un cadre en forme de H, dont, d'une part, l'extrémité arrière porte l'essieu 6 et, d'autre part, l'extrémité avant est montée pivotante sur le châssis 2 (et plus précisément du côté de l'extrémité arrière des longerons latéraux 5b).
L'articulation de la structure support 10 s'effectue selon un axe perpendiculaire à l'axe longitudinal 2' du châssis 2 ; cette articulation se situe encore ici au milieu, ou au moins approximativement au milieu, de la longueur du châssis 2.
Cette structure support 10 forme ainsi, avec le châssis 2 associé, un mécanisme du genre « ciseau ».

Des vérins hydrauliques 11, ici au nombre de deux, sont positionnés sensiblement verticalement sur le dispositif 1, articulés, d'une part, côté tige, sur l'extrémité arrière de la structure support 10 (du côté de l'essieu 6), et d'autre part, côté cylindre, sur l'extrémité arrière du châssis 2 (plus précisément du côté de l'extrémité arrière du longeron principal 5a).

Tel que développé ci-après en relation avec les figures 7 et 8, les manoeuvres en repliement et déploiement de ces deux vérins 11 vont permettre respectivement la fermeture et l'ouverture du « ciseau », c'est-à-dire encore le mouvement de l'essieu 6 entre une position repliée (du côté du châssis 2) et une position déployée (à distance de ce même châssis 2) respectivement.

Des moyens mécaniques possibles pour la manoeuvre du timon avant 7 sont quant à eux représentés en particulier sur la figure 6.

En l'espèce, le timon avant 7 est associé à l'extrémité avant du châssis 2 par l'intermédiaire de moyens mécaniques 15 qui permettent sa manoeuvre verticale en montée ou en descente, parallèlement ou au moins sensiblement parallèlement à lui-même.

Ces moyens mécaniques 15, disposés entre l'extrémité arrière du timon 7 et l'extrémité avant du châssis 2, consistent ici en une structure de liaison type parallélogramme déformable qui se compose de deux paires de bielles articulées : une paire supérieure 15a et une paire inférieure 15b.
Les extrémités avant et arrière de ces paires de bielles 15a, 15b sont articulées respectivement selon des axes perpendiculaires à l'axe longitudinal 2' du châssis 2.

Des vérins hydrauliques 16, ici au nombre de deux, sont prévus pour assurer la déformation de la structure de liaison 15 et le déplacement vertical du timon 7.
Les deux vérins 16 en question s'étendent ici dans le même plan vertical que les bielles inférieures 15b ; ils s'étendent approximativement verticalement entre, d'une part, côté cylindre, l'extrémité avant du longeron principal 5a, de part et d'autre de celui-ci, et d'autre part, côté tige, l'extrémité avant en regard des bielles inférieures 15b.

Tel que développé ci-après en relation avec les figures 7 et 8, les manoeuvres en repliement et déploiement de ces deux vérins 16 vont permettre le mouvement du timon 7 entre une position repliée (du côté du châssis 2) et une position déployée (à distance de ce même châssis 2) respectivement.

Pour assurer un déplacement vertical ou au moins sensiblement vertical du châssis 2 par rapport au sol, les vérins 11 et 16 associés respectivement à l'essieu arrière 6 et au timon avant 7, sont avantageusement synchronisés en repliement et en déploiement.

Selon le présent mode de réalisation, cette synchronisation est ici assurée avantageusement par un principe d'échange de volume d'huile entre les deux vérins avant 16 et les deux vérins arrière 11.

A cet effet, les vérins hydrauliques avant 16 et arrière 11 sont du type à double effet ; ils comportent chacun deux chambres (non visibles) : l'une inférieure, côté tige, et l'autre supérieure, côté fût ou cylindre.
Ces vérins avant 16 et arrière 11 sont connectés hydrauliquement, de sorte à autoriser un échange d'huile entre - la chambre supérieure « côté fût », des vérins avant 16 et - la chambre inférieure « côté tige » des vérins arrière 11. Les chambres en question ont avantageusement des volumes identiques.

Ainsi, par exemple, pour la montée du châssis 2 (figure 8), on alimente hydrauliquement, par un distributeur du véhicule tracteur, la chambre « côté fût » des deux vérins arrière 11, ce qui provoque le déploiement de ces derniers. La structure support 10 pivote alors, et l'essieu arrière 6 s'écarte du châssis 2.
Simultanément, l'huile située dans la chambre « côté tige » des vérins arrière 11 est évacuée, pour alimenter les chambres « côté fût » des deux vérins avant 16. Cette circulation d'huile provoque la sortie de ces derniers, et assure l'écartement du timon avant 7 par rapport au châssis 2.
De cette façon, les quatre vérins 11, 16 sont manoeuvrés simultanément et de manière synchrone en déploiement ; et la montée du châssis 2, parallèlement au sol, est obtenue.

A l'inverse, pour la descente du châssis 2 (figure 7), le circuit hydraulique est ouvert par l'action sur le distributeur du véhicule tracteur. La masse du châssis 2 assure l'évacuation de l'huile contenue dans les chambres « côté fût » des vérins 11 et 16 (l'huile chemine dans un sens inverse à celui décrit ci-dessus).
L'essieu arrière 6 et le timon avant 7 se rapprochent alors du châssis 2, de manière synchrone ; le châssis 2 s'abaisse ainsi parallèlement au sol (comme représenté sur la figure 7).

Par ailleurs, comme abordé précédemment et toujours selon l'invention, les caissons latéraux 3 et le caisson central 4 sont associés à des moyens de manoeuvre verticale, en particulier entre des positions basse « active » (figure 2) et relevée « inactive » (figure 3), ici avantageusement de manière indépendante les uns par rapport aux autres.

Les caissons de broyage/déchiquetage latéraux 3 sont montés en porte-à-faux sur le châssis 2, de part et d'autre de ce dernier. Ces caissons latéraux 3 se trouvent en avant de l'essieu 6.
Une structure de charnière 18 est prévue entre l'extrémité intérieure de chaque caisson latéral 3 et le châssis 2 associé (figure 2). Un vérin hydraulique transversal 19 s'étend également entre ces deux éléments, pour la manoeuvre entre les deux positions de fin de course déployée horizontale et repliée verticale.

Des roues arrière 3', avantageusement réglables en hauteur, sont prévues sur les caissons latéraux 3 pour venir reposer sur le sol lorsque ces caissons latéraux 3 sont déployés.

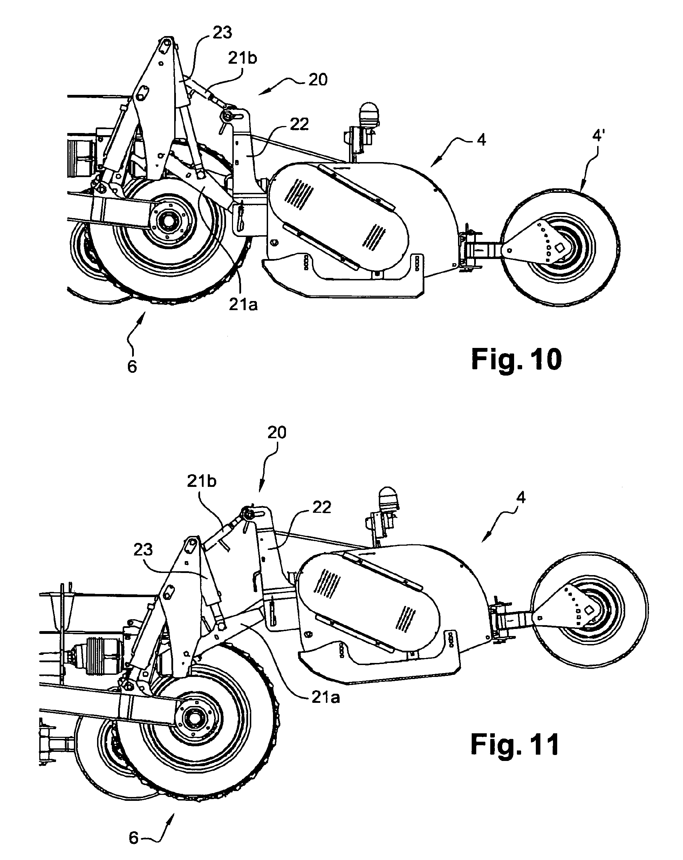

Le caisson de broyage/déchiquetage central 4 est monté dans le prolongement du châssis 2 et à l'arrière de l'essieu 6, par l'intermédiaire de moyens de manoeuvre dédiés décrits ci-après, pour permettre son déplacement vertical, en descente (figure 10) et en montée (figure 11) par rapport au châssis 2.

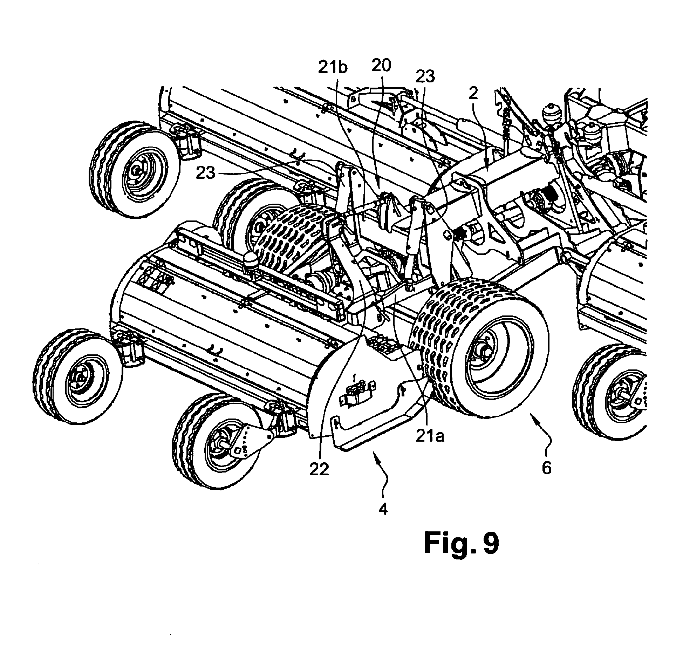

Tel que représenté en particulier sur la figure 9, les moyens 20 pour la manoeuvre du caisson central 4 se présentent ici sous la forme d'un dispositif de relevage trois points. Le caisson central 4 est ici manoeuvrable verticalement parallèlement à lui-même.

Ce dispositif de relevage 20 se compose d'un ensemble de trois bras de manoeuvre 21, dont l'une des extrémités est articulée au niveau de l'extrémité arrière du châssis 2, et dont l'autre extrémité est articulée sur une structure de réception 22 (de forme générale triangulaire) équipant le caisson central 4.
Plus précisément, ces bras 21 sont répartis parallèlement et selon un agencement triangulaire vertical, avec deux bras inférieurs latéraux 21a et un bras supérieur central 21b. Leurs extrémités sont articulées perpendiculairement à l'axe longitudinal 2' du châssis 2.

Deux vérins hydrauliques de manoeuvre 23 sont prévus pour permettre la manoeuvre en montée et en descente du caisson de broyage/déchiquetage 4.
Ces vérins 23 sont pour cela disposés verticalement, ou sensiblement verticalement, entre, d'une part, l'un des bras inférieurs latéraux 21a et, d'autre part, l'extrémité arrière du châssis 2.

Tel que représenté sur la figure 10, les vérins 23 déployés assurent le positionnement du caisson de broyage/déchiquetage 4 en position basse « active » (ou descendu), utile pour le travail en champ. Dans ce cas, le caisson central 4 repose sur le sol par l'intermédiaire de roues arrière 4', avantageusement réglables en hauteur, dont il est équipé.
La rétraction des vérins 23 permet la manoeuvre du dispositif de relevage 20, assurant la levée du caisson central 4 dans sa position haute/relevée « inactive » (figure 11) à distance du sol, utile en particulier pour circuler sur la route.

Comme on peut le voir notamment sur les figures 7 et 8, l'entraînement en rotation des rotors équipant les caissons 3, 4 est ici obtenu par un boîtier de renvoi d'angle, relié à l'avant à la prise de force du tracteur par une transmission à cardan.
Ce boîtier de renvoi d'angle est connecté, latéralement, à une transmission à cardan permettant la mise en rotation du rotor de chaque caisson latéral 3 en passant par un montage poulie-courroie.
Ce boîtier de renvoi d'angle est aussi relié par l'arrière au caisson central 4, en passant par une transmission à cardan, un arbre intermédiaire monté sur des paliers et une transmission à cardan.

Le dispositif de broyage/déchiquetage 1, selon l'invention, peut ainsi être transformé entre les configurations active et inactive de manière simple et rapide, sans obliger l'utilisation d'un véhicule tracteur puissant et/ou lesté. De même, les configurations obtenues ont l'intérêt d'être optimales tant pour la route que pour le travail en champs.

Ces différentes manoeuvres du châssis 2 et des caissons 3, 4 assurent ici l'activation/l'inactivation automatique de fonctionnalités complémentaires, sans interventions manuelles de l'opérateur sur le dispositif de broyage/déchiquetage 1.

Tout d'abord, le dispositif 1 est avantageusement équipé de butées pour définir la hauteur de travail du châssis 2 ; comme développé ci-après, ces butées sont activées/inactivées par la manoeuvre coordonnée de l'essieu arrière 6 et du caisson central 4.

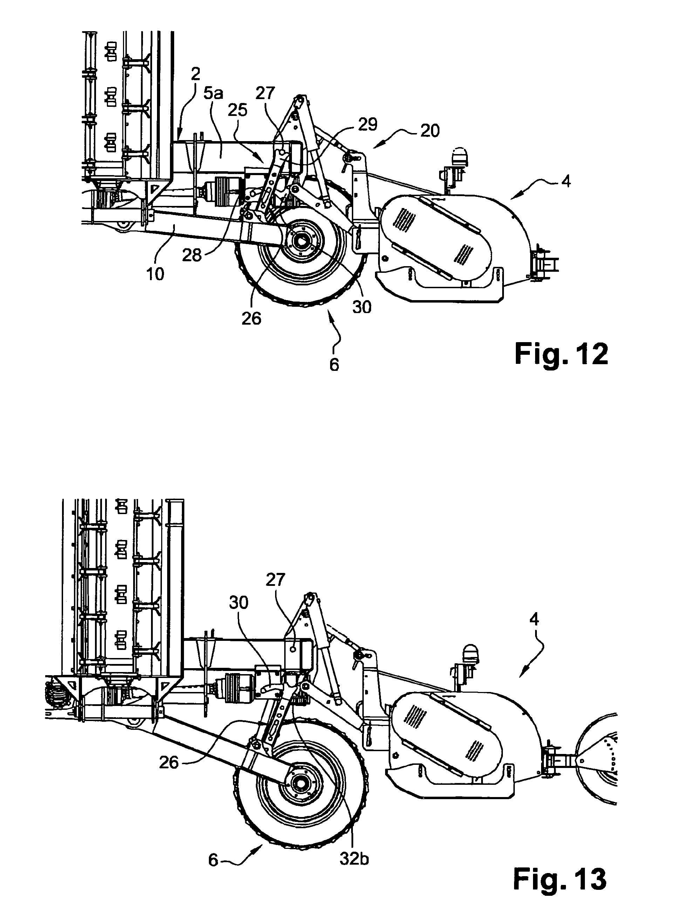

En l'occurrence, tel que représenté sur la figure 12, le dispositif broyeur/déchiqueteur 1 comporte des moyens de butée « activables/inactivables » 25, pour définir la position basse « intermédiaire » du châssis 2 et pour régler la hauteur de la position de travail.

Ces moyens de butée 25 se composent, d'une part, d'un bras pivotant télescopique 26, porté par l'extrémité arrière de la structure support d'essieu 10, et d'autre part, d'un organe de butée 27, équipant l'extrémité arrière du châssis 2 (et en particulier l'extrémité arrière de son longeron principal 5a).
Le bras télescopique 26 se compose - d'une coulisse 28, dont l'extrémité inférieure est montée articulée sur la structure support 10 de l'essieu arrière 6, et - d'un coulisseau 29 dont l'extrémité supérieure débouchante constitue un organe de réception en forme de U, apte à recevoir l'organe de butée 27.
Le coulisseau 29 est réglable en hauteur au sein de la coulisse 28, par la mise en oeuvre de moyens de blocage/d'indexation mécaniques (par exemple du genre goupille(s)). Ce réglage en longueur permet un ajustement simple et rapide de la position basse « intermédiaire » du châssis 2.

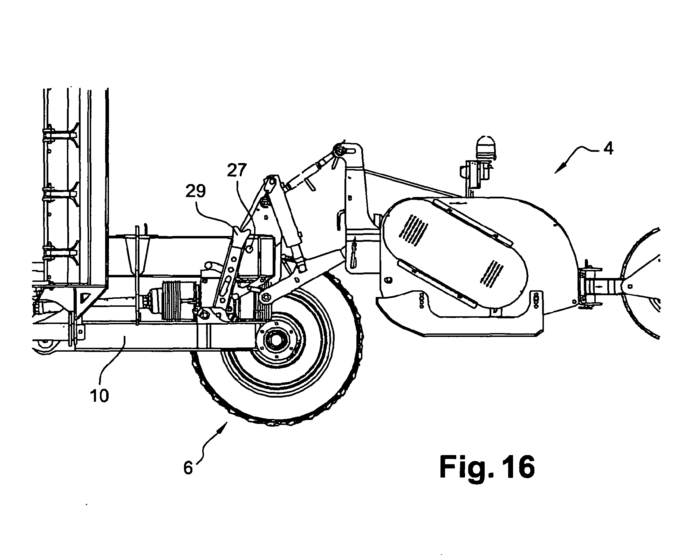

Ces moyens de butée 25 sont activables/inactivables, pour autoriser la manoeuvre du châssis 2 selon respectivement la position basse « intermédiaire » (figure 12) et la position basse « maximale » ou « finale » (figure 16) : le châssis étant plus proche du sol dans la position basse « maximale », que dans la position basse « intermédiaire ».

Les moyens pour inactiver/activer les moyens de butée 25 se présentent sous la forme d'une pièce articulée 30 du genre fourchette, montée pivotante au niveau de l'extrémité arrière du châssis 2 (et en particulier du longeron principal 5a) et déplacée par le dispositif de relevage 20 du caisson central 4.

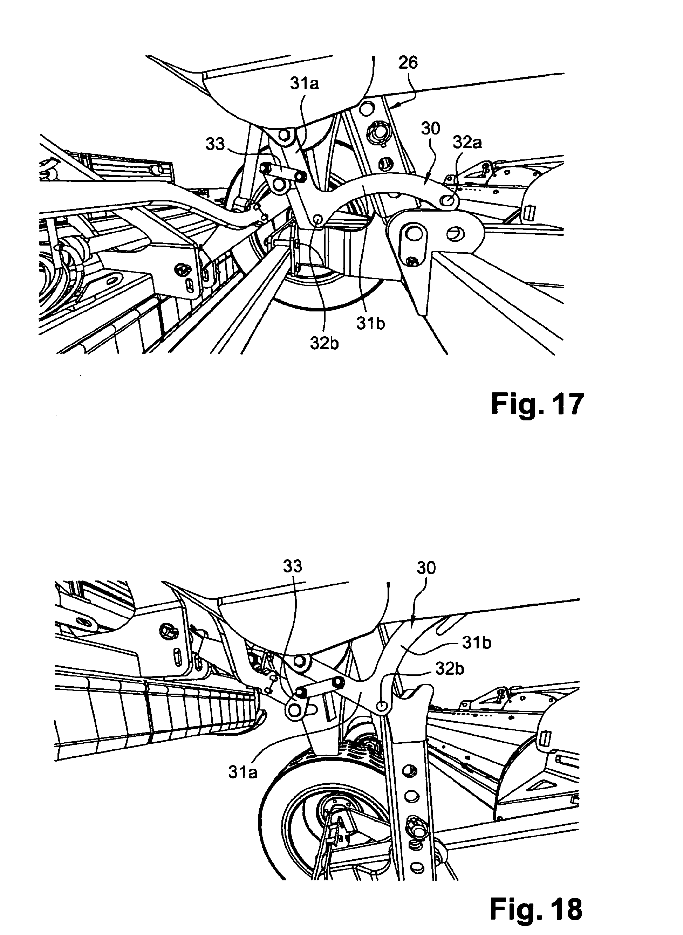

Telle que représentée en particulier sur les figures 17 et 18, cette pièce articulée 30, en forme générale de L, se compose de deux tronçons 31 :
- un premier tronçon 31a est articulé, au niveau de l'une de ses extrémités libres, sur l'extrémité arrière du longeron principal 5a, (selon un axe transversal et perpendiculaire à l'axe longitudinal 2' du châssis 2), et
- le second tronçon 31b est pourvu, à chacune de ses extrémités, d'un ergot 32, l'un avant 32a et arrière 32b ; ces ergots 32 sont destinés à s'étendre en regard, et de part et d'autre, du bras télescopique 26 de sorte à définir des butées avant et arrière.

Cette pièce de manoeuvre 30 est encore associée, par le biais d'un compas de manoeuvre 33, avec le dispositif de relevage 20 du caisson central 4.
Cet agencement permet de relier l'articulation de la pièce de manoeuvre 30 avec les déplacements du dispositif de relevage 20.

Le passage d'une position active à une position inactive de ces moyens de butée 25, autorisant le passage du châssis 2 de la position basse « intermédiaire » à la position basse « maximale », est décrit ci-dessous en relation avec les figures 12 à 16.

Dans la position « travail » (figure 12), l'essieu arrière 6 est relevé vers le châssis 2. Le bras pivotant 26 est incliné vers l'arrière, de sorte que l'extrémité supérieure de son coulisseau 29 réceptionne l'organe de butée 27 du châssis 2.
Le châssis 2 est dans une position basse « intermédiaire » et en butée. Le réglage de la longueur du bras pivotant 26 permet un ajustement de la hauteur du châssis 2 en position basse « intermédiaire », utile pour le travail.

Pour inactiver les moyens de butée 25, l'essieu arrière 6 est tout d'abord déployé par rapport au châssis 2 (figure 13).
Le bras articulé 26 se dissocie alors de l'organe de butée 27 et il vient en contact contre la butée arrière 32b de la pièce articulée 30.

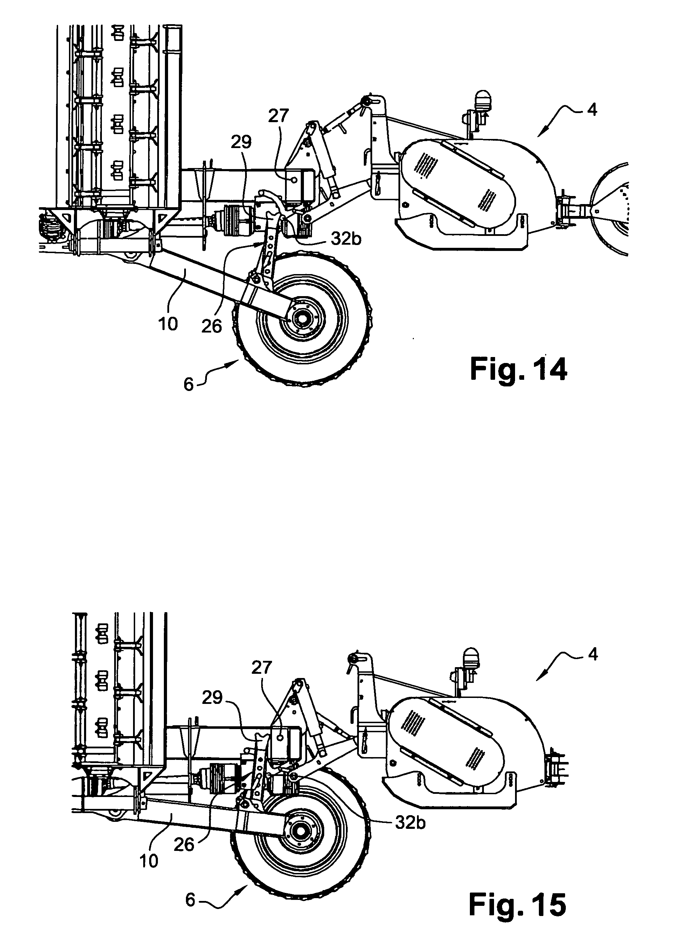

La manoeuvre vers le haut du caisson 4, par repliement des vérins 23, provoque le pivotement de la pièce articulée 30, en l'occurrence dans le sens des aiguilles d'une montre sur la figure 14.
Ce pivotement de la pièce 30 est réalisé par le déploiement du compas de manoeuvre 33, tel que représenté sur la figure 18.
Le bras articulé 26 est alors pivoté vers l'avant, par la butée arrière 32b attenante. L'extrémité supérieure de son coulisseau 29 est ainsi décalée horizontalement par rapport à l'organe de butée 27 complémentaire.

Ensuite, la structure support 10 de l'essieu arrière 6 peut être pivotée de sorte à être entièrement remontée contre le châssis 2 (figures 15 et 16), au-delà de la position relevée avec la butée 25 active (figure 12).
Le bras articulé 26 remonte alors à côté de l'organe de butée 27, sans venir coopérer avec ce dernier.
Dans cette position, le châssis 2 est en position basse maximale/finale, autorisant une stabilité optimale.

A l'inverse, lorsque l'opérateur souhaite ramener le dispositif broyeur/déchiqueteur 1 en position de travail, il lui suffit de reproduire les étapes précédentes dans un sens inverse.

En particulier, il convient ici successivement de procéder :
- au déploiement de l'essieu 6 au maximum (ou au moins pratiquement au maximum),
- au déplacement du caisson central 4 en position basse, ce qui provoque le pivotement de la pièce pivotante 30 dans le sens inverse des aiguilles d'une montre et l'accompagnement du bras articulé 26 jusqu'à une inclinaison adaptée pour venir coopérer avec l'organe de butée 27, puis
- au repliement de l'essieu 6 jusqu'à ce que l'organe de butée 27 vienne en contact avec le bras articulé 26.

L'autre fonction qui peut être mise en oeuvre automatiquement par les différents mouvements du dispositif broyeur/déchiqueteur 1 correspond au verrouillage/ déverrouillage des caissons de broyage/déchiquetage latéraux 3.

A cet effet, tel que représenté sur les figures 1 et 2, le châssis 2, et en particulier son longeron principal 5a, est pourvu de deux crochets 35, destinés à venir coopérer chacun avec un organe de réception complémentaire 36 équipant les caissons latéraux 3.

Comme représenté en particulier sur la figure 6, ces crochets 35 s'étendent en porte-à-faux à partir du longeron principal 5a, de part et d'autre de ce dernier.
Ils sont articulés chacun au niveau de leurs extrémités attenantes, selon un axe parallèle à celui longitudinal 2' du châssis 2.

Chaque crochet 35 est manoeuvrable en rotation au moyen d'un bras 38, formant biellette.
Comme visible figures 7 et 8, ces biellettes 38 s'étendent dans un plan vertical (ou au moins sensiblement vertical) entre, d'une part, l'extrémité avant articulée de la structure support 10 de l'essieu arrière 6, et d'autre part, l'un desdits crochets 35. Cette dernière liaison s'effectue par le biais de moyens de maintien élastiques en position 39, autorisant un jeu « élastique » des crochets 35 autour de leurs axes de manoeuvre respectifs.

En pratique, lorsque la structure support d'essieu arrière 10 est relevée en direction du châssis 2, les crochets 35 sont tirés vers le bas par la biellette 38.
Dans cette position, le repliement des caissons latéraux 3 provoque la coopération « automatique » de leurs organes de réception 36 respectifs avec les crochets 35 correspondants. Cette coopération s'effectue ici automatiquement, du fait de l'articulation élastique des crochets 35.
Dans cette position, les caissons latéraux 3 sont sécurisés en position relevée.

Pour le retour en position travail, le support d'essieu arrière 10 est déployé. Cette manoeuvre provoque le mouvement vers le haut des biellettes 38, aboutissant à la rotation des crochets 35 associés en direction l'un de l'autre.
Ce mouvement libère les organes de réception 36 équipant les caissons latéraux 3, qui peuvent alors être manoeuvrés dans leur position horizontale déployée.

De manière générale et en pratique, en configuration route, le châssis 2 est en position basse maximale. Les caissons latéraux 3 et le caisson central 4 sont en position relevée (figure 4).

La mise en position travail pour le déchiquetage/broyage des végétaux consiste à provoquer la montée du châssis 2 par le déploiement de l'essieu arrière 6 et du timon avant 7 (figure 8). Le mouvement de l'essieu 6 entraîne le déverrouillage des crochets 35 par rapport aux caissons latéraux 3. Les caissons latéraux 3 en question peuvent alors être déployés à l'horizontale.

Le châssis 2 étant toujours en position haute, le caisson central 4 peut également être abaissé, en position basse de travail.
Ce mouvement entraîne en parallèle le déplacement des bras de butée 26 vers l'arrière, en position active.

Le châssis 2 est ensuite redescendu (par le repliement de l'essieu arrière 6 et du timon avant 7 vers le châssis 2), cela jusqu'à ce que les bras de butée 26 reçoivent les organes de butée du châssis 2 (figure 3). Les roues 3' et 4' des caissons 3 et 4 sont avantageusement réglées en hauteur en fonction du réglage des moyens de butée 25.

Lors du travail sur parcelles, par exemple pour tourner en bout de parcelle, les caissons de broyage/déchiquetage 3, 4 peuvent être soulevés par rapport au sol par la manoeuvre du châssis 2 en hauteur, sans obligation de les replier.

Pour le retour en configuration adaptée à la route, le châssis 2 est monté par rapport au sol.
Ensuite, les caissons de broyage/déchiquetage latéraux 3, tout comme le caisson de broyage/déchiquetage central 4, sont relevés.
La manoeuvre de ce caisson central 4 provoque le déplacement des butées de travail 25 vers l'avant, c'est-à-dire en décalage par rapport à l'organe de réception complémentaire 27.
Le châssis 2 peut être alors descendu en position basse maximale ; et les crochets 35, en position « active », viennent se verrouiller automatiquement sur les organes de réception complémentaires 36 équipant les caissons latéraux 3 relevés.

## Revendications

1. Dispositif agricole pour le déchiquetage et le broyage de végétaux au sol, destiné à être attelé à un véhicule tracteur, lequel dispositif (1) comprend un châssis (2) équipé - à l'arrière, d'un essieu (6) muni de roues destinées à rouler sur le sol, - à l'avant, d'un timon (7) pour l'accrochage sur l'attelage trois points dudit véhicule tracteur, et - de trois caissons de déchiquetage/broyage (3, 4) comportant chacun au moins un rotor coupant qui est destiné à être orienté du côté du sol et entraîné par des moyens de transmission connectés avec la prise de force dudit véhicule tracteur, l'un desdits caissons de déchiquetage/broyage (4), dit « central », étant porté en position centrale sur l'axe longitudinal (2') dudit châssis (2) entre les deux autres caissons (3) dits « latéraux », lesquels caissons latéraux (3) prolongent ledit châssis (2) sur les côtés et comportent des moyens de manoeuvre (19) pour assurer leur relèvement en position verticale par rapport audit châssis (2),
lequel essieu arrière (6) coopère avec ledit châssis (2) par l'intermédiaire de moyens de manoeuvre (10, 11) qui permettent son déplacement vertical par rapport audit châssis (2), en déploiement et en repliement, de manière à autoriser un déplacement vertical dudit châssis (2), en montée ou en descente par rapport au sol,
lesquels caissons latéraux (3) sont portés par le châssis (2) indépendamment du caisson central (4), de part et d'autre dudit châssis et en avant de l'essieu arrière (6), par l'intermédiaire de moyens de manoeuvre (18, 19) qui permettent leur articulation par rapport audit châssis (2),
lequel caisson central (4) est porté par ledit châssis (2), dans le prolongement dudit châssis (2) et derrière ledit essieu arrière (6), par l'intermédiaire de moyens de manoeuvre (20) qui permettent son déplacement vertical, en montée ou en descente, par rapport audit châssis (2),
**caractérisé en ce que** ledit timon avant (7) coopère avec ledit châssis (2) également par l'intermédiaire de moyens de manoeuvre (15, 16) qui permettent son déplacement vertical par rapport audit châssis (2), en déploiement et en repliement, de manière à autoriser un déplacement vertical dudit châssis (2) parallèlement à lui-même, ou au moins sensiblement parallèlement à lui-même, en montée ou en descente par rapport au sol,
et **en ce que** ledit dispositif agricole (1) est manoeuvrable selon deux principales configurations :
- une configuration « inactive », en particulier pour le cheminement sur route, dans laquelle le châssis (2) est déplacé dans une position basse « maximale », à proximité du sol, et dans laquelle les différents caissons (3, 4) sont relevés, à distance du sol, et
- une configuration « active », en particulier pour le déchiquetage et le broyage des végétaux, dans laquelle ledit châssis (2) est déplacé dans une position basse « intermédiaire », plus haute que ladite position basse maximale, et dans laquelle les différents caissons (3, 4) sont amenés en position basse active de déchiquetage/broyage, à proximité du sol.

2. Dispositif de broyage/déchiquetage selon la revendication 1, **caractérisé en ce que** le timon (7) est associé à l'extrémité avant du châssis (2) par l'intermédiaire de moyens de manoeuvre (15, 16) qui permettent son déplacement vertical parallèlement à lui-même ou au moins sensiblement parallèlement à lui-même, cela en déploiement ou repliement par rapport audit châssis (2), lesquels moyens de manoeuvre se composent de bielles (15) agencées pour former un parallélogramme déformable entre ledit châssis (2) et ledit timon (7), des moyens d'action (16) du genre vérin(s) étant prévus entre ledit châssis (2) et lesdites bielles (15) pour assurer la manoeuvre verticale dudit timon (7).

3. Dispositif de broyage/déchiquetage selon l'une quelconque des revendications 1 ou 2, **caractérisé en ce que** les moyens d'action arrière (11) et avant (16), respectivement de l'essieu (6) et du timon (7), consistent en des vérins hydrauliques, lesquels vérins avant (16) et arrière (11) sont connectés de sorte à autoriser un échange d'huile entre, d'une part, la chambre côté « fût » des vérins avant (16) ou arrière (11), et d'autre part, la chambre côté « tige » des autres vérins (11, 16), lesquelles chambres ont un volume identique, cela pour assurer le déplacement vertical du châssis (2) parallèlement à lui-même, en montée ou en descente par rapport au sol.

4. Dispositif de broyage/déchiquetage selon l'une quelconque des revendications 1 à 3, **caractérisé en ce que** l'essieu arrière (6) est porté par une structure support (10) montée pivotante sur ledit châssis (2), formant ainsi un mécanisme du genre « ciseau », des moyens d'action (11) du genre vérin(s) étant prévus entre ledit châssis (2) et ladite structure support (10) pour manoeuvrer cette dernière en rotation et assurer ainsi le déplacement vertical en déploiement et en repliement de l'essieu (6) par rapport audit châssis (2).

5. Dispositif de broyage/déchiquetage selon la revendication 4, **caractérisé en ce que** l'essieu (6) est porté par l'extrémité arrière de la structure support (10), elle-même associée au niveau de son extrémité avant au châssis (2) par une articulation située au milieu ou au moins approximativement au milieu de la longueur dudit châssis (2).

6. Dispositif de broyage/déchiquetage selon l'une quelconque des revendications 1 à 5, **caractérisé en ce que** les moyens de manoeuvre (10, 11) de l'essieu arrière (6) sont associés à des moyens de butée (25) destinés à définir une position de fin de course réglable pour le repliement dudit essieu (6) vers le châssis (2), en particulier pour régler la position basse « intermédiaire » du châssis (2), lesquels moyens de butée (25) sont pilotés par les moyens de manoeuvre (20) du caisson central (4) entre : - une configuration « active » de butée, lorsque ledit caisson central (4) atteint sa position basse de broyage/déchiquetage, et - une configuration « inactive », lorsque ledit caisson central (4) atteint sa position haute inactive.

7. Dispositif de broyage/déchiquetage selon l'une quelconque des revendications 1 à 6, **caractérisé en ce que** les moyens de manoeuvre (10, 11) de l'essieu arrière (6) sont associés à des moyens (35, 36) pour le verrouillage des caissons latéraux (3) en position relevée verticale, lesquels moyens de verrouillage (35, 36) sont manoeuvrables entre : - une configuration « active » de verrouillage, lorsque ledit essieu (6) atteint sa position de fin de course à proximité du châssis (2), et - une configuration « inactive », lorsque ledit essieu (6) est manoeuvré à distance dudit châssis (2).

8. Dispositif de broyage/déchiquetage selon l'une quelconque des revendications 1 à 7, **caractérisé en ce que** le châssis (2) consiste en une structure métallique mécano-soudée, comportant une partie centrale longitudinale à distance du sol, laquelle partie centrale longitudinale est munie - au niveau de son extrémité avant, du timon (7) pour l'attelage sur le véhicule tracteur, - à son extrémité arrière, de l'essieu (6) qui s'étend jusqu'au sol, - sur chacun de ses côtés et en avant de l'essieu (6), de l'un des caissons de broyage/déchiquetage latéraux (3), et - en arrière de l'essieu (6), du caisson de broyage/déchiquetage central (4).

## Patentansprüche

1. Landwirtschaftliche Vorrichtung zum Schreddern und Zerkleinern von Pflanzen am Boden, die dazu bestimmt ist, an ein Schleppfahrzeug gekuppelt zu werden, wobei die Vorrichtung (1) ein Chassis (2) aufweist, das an der Rückseite mit einer Achse (6) ausgerüstet ist, die mit Rädern versehen ist, die dazu bestimmt sind, auf dem Boden zu fahren, und an der Vorderseite mit einer Deichsel (7) zum Anhängen an einer Dreipunktekupplung des Schleppfahrzugs und drei Schredder-/Zerkleinerungskasten (3, 4), die jeweils mindestens einen Schneidrotor aufweisen, der dazu bestimmt ist, zu der Seite des Bodens gerichtet zu sein und der von Übertragungsmitteln angetrieben wird, die mit der Zapfwelle des Schleppfahrzeugs verbunden sind, wobei einer der Schredder-/Zerkleinerungskasten (4), der "zentral" genannt wird, in zentraler Position auf der Längsachse (2') des Chassis (2) zwischen den zwei anderen Kasten (3), die "seitlich" genannt werden, getragen wird, wobei die seitlichen Kästen (3) das Chassis (2) auf den Seiten verlängern und Manövriermittel (19) aufweisen, um ihr Anheben in vertikale Position in Bezug zu dem Chassis (2) sicherzustellen,
wobei die Heckachse (6) mit dem Chassis (2) über Manövriermittel (10, 11) zusammenwirkt, die ihr vertikales Verlagern in Bezug zu dem Chassis (2) beim Ausfahren und beim Zusammenlegen erlauben, um eine vertikale Bewegung des Chassis (2) beim Heben oder Senken in Bezug zu dem Boden zu erlauben,
wobei die seitlichen Kästen (3) von dem Chassis (2) unabhängig von dem zentralen Kasten (4) zu beiden Seiten des Chassis und vor der Heckachse (6) über Manövriermittel (18, 19) getragen werden, die ihr Anlenken in Bezug zu dem Chassis (2) erlauben,
wobei der zentrale Kasten (4) von dem Chassis (2) in der Verlängerung des Chassis (2) und hinter der Heckachse (6) über Manövriermittel (20) getragen wird, die sein vertikales Bewegen zum Heben oder Senken in Bezug zu dem Chassis (2) erlauben,
**dadurch gekennzeichnet, dass** die vordere Deichsel (7) mit dem Chassis (2) auch über Manövriermittel (15, 16) zusammenwirkt, die ihr vertikales Bewegen in Bezug zu dem Chassis (2) beim Ausfahren und beim Zusammenlegen derart erlauben, dass eine vertikale Bewegung des Chassis (2) parallel zu sich selbst oder mindestens im Wesentlichen parallel zu sich selbst beim Heben oder Senken in Bezug zu dem Boden erlaubt wird,
und dadurch, dass die landwirtschaftliche Vorrichtung (1) gemäß der zwei Hauptkonfigurationen manövriert werden kann:
- eine "inaktive" Konfiguration, insbesondere für das Fahren im Straßenverkehr, bei der das Chassis (2) in eine "maximale" Tiefstellung in der Nähe des Bodens bewegt wird, und in der die verschiedenen Kästen (3, 4) vom Boden entfernt angehoben sind, und
- eine "aktive" Position, insbesondere für das Schreddern und das Zerkleinern der Pflanzen, in der das Chassis (2) in eine "Zwischen"-Tiefstellung bewegt wird, die höher ist als die maximale Tiefstellung, und bei der die verschiedenen Kästen (3, 4) in die Nähe des Bodens in aktive Schredder-/Zerkleinerungstiefstellung gebracht werden.

2. Schredder-/Zerkleinerungsvorrichtung nach Anspruch 1, **dadurch gekennzeichnet, dass** die Deichsel (7) an dem vorderen Ende des Chassis (2) über Manövriermittel (15, 16) verbunden ist, die ihr vertikales Bewegen parallel zu sich selbst oder wenigstens im Wesentlichen parallel zu sich selbst erlauben, und dies beim Ausfahren oder Zusammenlegen in Bezug zu dem Chassis (2), wobei die Manövriermittel aus Pleueln (15) bestehen, die eingerichtet sind, um ein verformbares Parallelogramm zwischen dem Chassis (2) und der Deichsel (7) zu bilden, wobei Betätigungsmittel (16) des Typs Zylinder zwischen dem Chassis (2) und den Pleueln (15) vorgesehen sind, um das vertikale Manöver der Deichsel (7) sicherzustellen.

3. Schredder-/Zerkleinerungsvorrichtung nach einem der Ansprüche 1 oder 2, **dadurch gekennzeichnet, dass** die hinteren Betätigungsmittel (11) und vorderen Betätigungsmittel (16) jeweils der Achse (6) und der Deichsel (7) aus Hydraulikzylindern bestehen, wobei die vorderen Zylinder (16) und die hinteren Zylinder (11) derart verbunden sind, dass sie einen Ölaustausch zwischen einerseits der Kammer auf der "Kolben"-Seite der vorderen Zylinder (16) oder hinteren Zylinder (11) und andererseits der Kammer auf der "Schaft"-Seite der anderen Zylinder (11, 16) gestatten, wobei die Kammern ein identisches Volumen haben, um die vertikale Bewegung des Chassis (2) parallel zu sich selbst beim Heben oder Senken in Bezug zum Boden sicherzustellen.

4. Schredder-/Zerkleinerungsvorrichtung nach einem der Ansprüche 1 bis 3, **dadurch gekennzeichnet, dass** die Heckachse (6) von einer Tragstruktur (10) getragen wird, die auf dem Chassis (2) schwenkend montiert ist und daher einen Mechanismus des Typs "Schere" bildet, wobei Betätigungsmittel (11) des Typs Zylinder zwischen dem Chassis (2) und der Tragstruktur (10) vorgesehen sind, um diese Letztere in Drehung zu manövrieren und daher die vertikale Bewegung beim Ausfahren und Zusammenlegen der Achse (6) in Bezug zu dem Chassis (2) sicherzustellen.

5. Schredder-/Zerkleinerungsvorrichtung nach Anspruch 4, **dadurch gekennzeichnet, dass** die Achse (6) von dem hinteren Ende der Tragstruktur (10) getragen wird, die selbst auf dem Niveau ihres vorderen Endes mit dem Chassis (2) durch eine Anlenkung verbunden ist, die sich in der Mitte oder mindestens ungefähr in der Mitte der Länge des Chassis (2) befindet.

6. Schredder-/Zerkleinerungsvorrichtung nach einem der Ansprüche 1 bis 5, **dadurch gekennzeichnet, dass** die Manövriermittel (10, 11) der Heckachse (6) mit Anschlagmitteln (25) verbunden sind, die dazu bestimmt sind, eine einstellbare Hubendposition für das Zusammenlegen der Achse (6) zu dem Chassis (2) zu definieren, insbesondere, um die "Zwischen"-Tiefstellung des Chassis (2) einzustellen, wobei die Anschlagmittel (25) von den Manövriermitteln (20) des zentralen Kastens (4) gesteuert werden zwischen: einer "aktiven Anschlagkonfiguration, wenn der zentrale Kasten (4) seine Schredder-/Zerkleinerungstiefstellung erreicht, und einer "inaktiven" Konfiguration, wenn der zentrale Kasten (4) seine inaktive Hochstellung erreicht.

7. Schredder-/Zerkleinerungsvorrichtung nach einem der Ansprüche 1 bis 6, **dadurch gekennzeichnet, dass** die Manövriermittel (10, 11) der Heckachse (6) mit Mitteln (35, 36) zum Verriegeln der seitlichen Kästen (3) in gehobener vertikaler Position verbunden sind, wobei die Verriegelungsmittel (35, 36) manövrierbar sind zwischen: einer "aktiven" Verriegelungskonfiguration, wenn die Achse (6) ihre Hubendposition in der Nähe des Chassis (2) erreicht hat, und einer "inaktiven" Konfiguration, wenn die Achse (6) entfernt von dem Chassis (2) manövriert wird.

8. Schredder-/Zerkleinerungsvorrichtung nach einem der Ansprüche 1 bis 7, **dadurch gekennzeichnet, dass** das Chassis (2) aus einer mechanisch geschweißten Metallstruktur besteht, die einen zentralen Längsteil in Entfernung vom Boden aufweist, wobei der zentrale Längsteil auf dem Niveau seines vorderen Endes mit der Deichsel (7) zum Kuppeln auf dem Schleppfahrzeug, an seinem hinteren Ende mit der Achse (6), die sich bis zum Boden erstreckt, auf jeder seiner Seiten vor der Achse (6) mit einem der seitlichen Schredder-/Zerkleinerungskasten (3) und hinter der Achse (6) mit dem zentralen Schredder-/Zerkleinerungskasten versehen ist.

## Claims

1. An agricultural device for shredding and grinding plants on the ground, intended to be coupled to a tractor vehicle, wherein said device (1) comprises a frame (2) equipped - on the rear, with an axle (6) provided with wheels intended to roll on the ground, - on the front, with a drawbar (7) for the coupling to the three-point linkage of said tractor vehicle, and - with three shredding/grinding boxes (3, 4) each including at least one cutting rotor that is intended to be oriented toward the ground and driven by transmission means connected with the power take-off of said tractor vehicle, one of said shredding /grinding boxes (4), referred to as "central", being carried at a central position on the longitudinal axis (2') of said frame (2) between the two other boxes (3), referred to as "lateral", wherein said lateral boxes (3) extend said frame (2) on the sides and include operating means (19) for insuring their raising up to a vertical position with respect to said frame (2),
wherein said rear axle (6) cooperates with said frame (2) through operating means (10, 11) that allow its vertical displacement with respect to said frame (2), in unfolding and refolding, so as to permit a vertical displacement of said frame (2), upward or downward with respect to the ground,
wherein said lateral boxes (3) are carried by the frame (2) independently of the central box (4), on either side of said frame and in front of the rear axle (6), through operating means (18, 19) that allow their articulation with respect to said frame (2),
wherein said central box (4) is carried by said frame (2), in the continuation of said frame (2) and behind said rear axle (6), through operating means (20) that allow its vertical displacement, upward or downward, with respect to said frame (2),
**characterized in that** said front drawbar (7) cooperates with said frame (2) also through operating means (15, 16) that allow its vertical displacement with respect to said frame (2), in unfolding and refolding, so as to permit a vertical displacement of said frame (2) parallel to itself, or at least substantially parallel to itself, upward or downward with respect to the ground, and **in that** said agricultural device (1) is operable in two main configurations:
- an "inactive" configuration, in particular for progression on road, in which the frame (2) is displaced into a "maximum" low position, near the ground, and in which the different boxes (3, 4) are raised up, away from the ground, and
- an "active" position, in particular for shredding and grinding of the plants, in which said frame (2) is displaced into an "intermediate" low position, higher than said maximum low position, and in which the different boxes (3, 4) are brought into an active shredding /grinding low position, near the ground.

2. The shredding / grinding device according to claim 1, **characterized in that** the drawbar (7) is associated with the front end of the frame (2) through operating means (15, 16) that allow its vertical displacement parallel to itself or at least substantially parallel to itself, this in unfolding or refolding with respect to said frame (2), wherein said operating means are consisted of connecting rods (15) arranged to form a deformable parallelogram between said frame (2) and said drawbar (7), working means (16) such as cylinder(s) being provided between said frame (2) and said connecting rods (15) to ensure the vertical operation of said drawbar (7).

3. The shredding / grinding device according to any one of claims 1 or 2, **characterized in that** the rear (11) and front (16) working means of the axle (6) and the drawbar (7), respectively, consist of hydraulic cylinders, wherein said front (16) and rear (11) cylinders are connected so as to allow an exchange of oil between, on the one hand, the "barrel"-side chamber of the front (16) or rear (11) cylinders, and on the other hand, the "rod"-side chamber of the other cylinders (11, 16), wherein said chambers have a same volume, in order to ensure the vertical displacement of the frame (2) parallel to itself, upward or downward with respect to the ground.

4. The shredding / grinding device according to any one of claims 1 to 3, **characterized in that** the rear axle (6) is carried by a support structure (10) mounted pivoting on said frame (2), thus forming a "chisel"-type mechanism, working means (11) such as cylinder(s) being provided between said frame (2) and said support structure (10) to operate the later in rotation and to therefore ensure the vertical displacement in unfolding and refolding of the axle (6) with respect to said frame (2).

5. The shredding / grinding device according to claim 4, **characterized in that** the axle (6) is carried by the rear end of the support structure (10), itself associated at its front end to the frame (2), by an articulation located at the middle or approximately the middle of the length of said frame (2).

6. The shredding / grinding device according to any one of claims 1 to 5, **characterized in that** the operating means (10, 11) of the rear axle (6) are associated with stop means (25) intended to define an adjustable stroke end position for the refolding of said axle (6) toward the frame (2), in particular to adjust the "intermediate" low position of the frame (2), wherein said stop means (25) are driven by the operating means (20) of the central box (4) between: - a stop "active" configuration, when said central box (4) reaches its low shredding/grinding position, and - an "inactive" position, when said central box (4) reaches its inactive, high position.

7. The shredding / grinding device according to any one of claims 1 to 6, **characterized in that** the operating means (10, 11) of the rear axle (6) are associated with means (35, 36) for locking the lateral boxes (3) in a vertical raised-up position, wherein said locking means (35, 36) are operable between: - an "active", locking configuration, when said axle (6) reaches its stroke end position near the frame (2), and - an "inactive" configuration, when said axle (6) is operated away from said frame (2).

8. The shredding / grinding device according to any one of claims 1 to 7, **characterized in that** the frame (2) consists of a mechanically welded metal structure, comprising a longitudinal central part remote from the ground, wherein said longitudinal central part is provided - at its front end, with the drawbar (7) for the coupling to the tractor vehicle, - at it rear end, with the axle (6) that extends to the ground, - on each of its sides and in front of the axle (6), with one of the lateral shredding/grinding boxes (3), and - behind the axle (6), with the central shredding/grinding box (4).
